# EUROPÄISCHE PATENTSCHRIFT

(11) **EP 0 566 948 B1**
(45) Veröffentlichungstag und Bekanntmachung des Hinweises auf die Patenterteilung: **11.09.1996**
(21) Anmeldenummer: 93105949.7
(22) Anmeldetag: 13.04.1993
(51) Int. Cl.: C08K 5/00, B07C 5/342

(54) **Verbessertes Verfahren zur Kennzeichnung von Kunststoff**
Improved method for marking plastics
Méthode améliorée pour marquer des matières plastiques

(30) Priorität: 23.04.1992 DE 4213323
(43) Veröffentlichungstag der Anmeldung: 27.10.1993
(73) Patentinhaber: BAYER AG, 51368 Leverkusen (DE)
(72) Erfinder: Becker, Arno, Dr., D-4150 Krefeld (DE); Luttermann, Klaus, D-5204 Lohmar 1 (DE); Claussen, Uwe, Dr., D-5090 Leverkusen 3 (DE); Orth, Peter, Dr., D-5000 Köln 60 (DE); Heiliger, Ludger, Dr., D-5090 Leverkusen 1 (DE); El Sayed, Aziz Dr., D-5090 Leverkusen 1 (DE)

(56) Entgegenhaltungen:
- EP-A- 0 476 416
- EP-A- 0 506 999
- US-A- 3 530 075

## Beschreibung

In der deutschen Offenlegungsschrift 40 29 167 ist ein Verfahren zum Erkennbarmachen von Kunststoffen beschrieben, indem man dem Kunststoff bei oder nach seiner Herstellung eine kleine Menge eines Fluoreszenzfarbstoffs zusetzt. Im Prinzip kann man einen so ausgerüsteten Kunststoff mit UV-Licht bestrahlen und durch Untersuchung der Fluoreszenzstrahlung wiedererkennen. Eine Schwierigkeit dieser Art der Kenntlichmachung liegt darin, daß die Menge geeigneter Fluoreszenzfarbstoffe begrenzt ist. Ferner muß man, um verschiedene mit verschiedenen Fluoreszenzfarbstoffen markierte Kunststoffe trennen zu können, darauf achten, daß sich die Fluoreszenzspektren hinreichend deutlich voneinander unterscheiden.

Da es für die Wiederverwendung von Kunststoffen wichtig ist, sortenreine Recyclate herzustellen, braucht man sehr viele eindeutig voneinander unterscheidbare Fluoreszenzfarbstoffe als "Marker" für Kunststoffe.

Es wurde gefunden, daß man nicht nur Fluoreszenzfarbstoffe mit verschiedenen Fluoreszenzspektren Kunststoffen zumischen kann, um diese voneinander zu unterscheiden, sondern daß man auch zusätzlich die Zeitdauer der Fluoreszenz ausnutzen kann. Es gibt nämlich Fluoreszenzfarbstoffe, die zwar aufgrund ihres Spektrums nicht zu unterscheiden sind, wohl aber sich in der Zeitdauer der Fluoreszenz sehr stark unterscheiden.

Gegenstand der Erfindung ist somit ein Verfahren zum Kenntlichmachen verschiedener Kunststoffe, das dadurch gekennzeichnet ist, daß jeder Kunststoff mit mehreren Fluoreszenzfarbstoffen versehen wird, die sich durch ihre Emissionsfrequenz und/oder durch die Fluoreszenzdauer unterscheiden, so daß jedem Kunststoff eindeutig ein Fluoreszenzmuster zugeordnet werden kann, das sich durch die Zeitdauer der Fluoreszenz und/oder durch die erscheinenden Fluoreszenzfrequenzen unterscheidet.

Dieses Verfahren laßt sich beispielhaft wie folgt beschreiben. Es werden beispielsweise verwendet zwei der Fluoreszenzfarbstoffe aus der Offenlegungsschrift 40 29 167 (beispielsweise die Farbstoffe Nr. 1 und Nr. 4 des Ausführungsbeispiels) - im folgenden "Lisafarbstoffe" - und zwei Komplexsalze seltener Erdmetalle, nämlich ein Komplexsalz des Terbiums und ein Komplexsalz des Europiums. Das Terbiumsalz fluoresziert grün, genau wie der grüne Lisafarbstoff und das Europiumsalz rot, genau wie der rote Lisafarbstoff, allerdings liegt die Fluoreszenzdauer der Lisafarbstoffe im Nanosekundenbereich, die der Komplexe der seltenen Erdmetalle im Bereich einiger hundert Mikrosekunden. Regt man eine Kunststoffprobe, die einen der beiden Farbstoffe und einen Komplex eines seltenen Erdmetalls enthält, mit einem kurzen Lichtblitz von z.B. 1 Nanosekunde Dauer an, so ist die Fluoreszenz des Lisafarbstoffs nach 1000 Nanosekunden praktisch vollkommen abgeklungen, während die Fluoreszenzlebensdauer des Metallkomplexes etwa 500 Mikrosekunden anhält. Andererseits trägt die Fluoreszenz des langfluoreszierenden Stoffes in den ersten 10 Nanosekunden praktisch nichts zur Gesamtintensität der Fluoreszenz bei, weil die Intensität der kurzlebigen Fluoreszenz in diesem Zeitintervall um einen Faktor 50 000 größer ist. Man kann also durch Verfolgung des Fluoreszenzverhaltens über die Zeit leicht feststellen, ob ein Kunststoff den einen oder den anderen oder beide Markierstoffe enthält, auch wenn sich die Fluoreszenzspektren nicht wesentlich unterscheiden. Hat man, wie oben vorgesehen, zwei grün fluoreszierende und zwei rot fluoreszierende Stoffe zur Verfügung, dann kann man daraus fünfzehn verschiedene Kombinationen bilden, d. h. alleine mit diesen vier Markierungsstoffen können fünfzehn verschiedene Kunststoffe so markiert werden, daß sie eindeutig wiedererkannt werden können. In der praktischen Ausführung können die Markiersubstanzen in Polymere eingebaut werden, die sich mit den zu kennzeichnenden Polymerisaten mischen und in dieser Form zugesetzt werden.

### Beispiel 1

Herstellung eines polymeren Terbiumkomplexes
1a) 0,05 mol p-Aminosalicylsäure werden mit 0,05 mol m-TMI® (α,α-Dimethyl-m-isopropenylbenzylisocyanat) und einer Spatelspitze 2,6-Bis^{t}butylphenol in 100 ml trockenem Aceton 6 Stunden unter Rückfluß erhitzt. Der entstandene Niederschlag wird abgesaugt, mit kaltem Aceton nachgewaschen und getrocknet. Die ¹H-NMR und IR-Analyse ergibt den erwarteten disubstituierten Harnstoff als reines Produkt. (γ ¹H 6,7 und 8,8 ppm, ω_{C-H}Harnstoff= 1630 cm⁻¹). Ausbeute: ca 63 % d.Th. 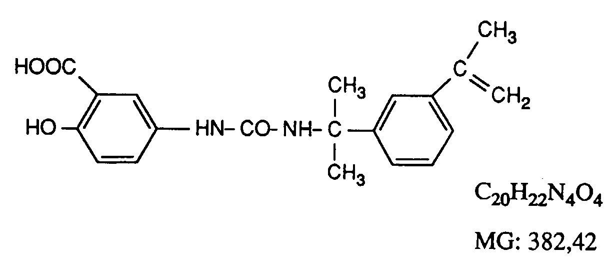
1b) 0,25 g Tb(NO₃)₃•5H₂O, (51 %Tb) 1,02 g des Produkts (1a) und 0,45 g Dimethylaminoethylmethacrylat werden in 54,9 ml Dimethylacetamid gelöst und die Komplexbildung durch UV-Anregung bei 366 nm geprüft.
   Dann wird 1,72 g Ethylenglycoldimethacrylat, 3,7 g Stearylmethacrylat und 0,17 g Azobisisobutyronitril zugegeben und 16 Stunden bei 65°C polymerisiert. Nach Absaugen des Niederschlages und Waschen mit Methanol wird das Filtrat in Methanol gegeben, abgesaugt, nachgewaschen und getrocknet. Ausbeute: 89 % d.Th. Erhalten wird ein das komplexgebundene Terbium enthaltendes Copolymerisat, das nach UV-Anregung intensiv grün leuchtet. Endprodukt: 1,8 % Tb

### Beispiel 2

Herstellung eines polymeren Europiumkomplexes
2a) 0,05 mol 1-(2-Naphthoyl)-3,3,3-trifluoroaceton werden in 50 ml Methanol gelöst. Dann wird 0,05 mol Natriummethanolat aus einer 30 gew.-%igen Natriummethanol-Lösung in Methanol langsam bei 0°C zudosiert, auf Zimmertemperatur erwärmt, 0,05 mol Chlormethylstyrol zugegeben und 16 Stunden auf Rückfluß erhitzt. Der entstandene feine Niederschlag (NaCl) wird abfiltriert, die Lösung im Wasserstrahlvakuum auf ca. 1/3 des Ausgangsvolumens eingeengt und mit soviel Wasser versetzt, daß sich der entstandene Niederschlag gerade löst. Die organische Phase wird abgetrennt, die wäßrige Phase zweimal mit Chloroform ausgeschüttelt, die vereinigten organischen Phasen über Natriumsulfat getrocknet, filtriert und eingedampft. Das Rohprodukt wird auf einer Kieselgelsäure (0,063 - 0,2 mm) in einem Lösungsmittelgemisch aus Toluol:Methylenchlorid:Ethylacetat:Methanol im Verhältnis 5:3:1:0,5 gereinigt. (γ ¹⁹F-76,6 ppm; Ausbeute: ca. 25 % d.Th. 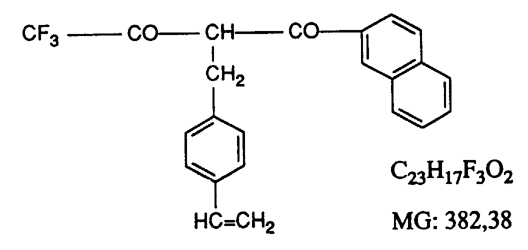
2b) 0,25 g EuCl₃•6 H₂O, (41 % Eu≙0,1 g) 2,11 g und 0,86 g Dimethylamino-ethylmethacrylat werden in 135,5 ml Methanol gelöst und die Komplexbildung durch UV-Anregung bei 366 nm geprüft (starkes rotes Leuchten). Dann wird 3,57 g Ethylenglykoldimethacrylat, 28,5 g Stearylmethacrylat und 0,35 g Azoisobutyronitril zugegeben, die Apparatur evakuiert, mit Reinststickstoff belüftet, dieser Vorgang noch zweimal wiederholt und auf 65°C erhitzt. Bereits nach wenigen Stunden zeigt sich ein weißer Niederschlag, der nach 16 Stunden Reaktionszeit vollständig ausgefallen ist. Der Niederschlag wird abgesaugt, mit Methanol nachgewaschen und getrocknet. Ausbeute: 90 % d.Th. Erhalten wird ein das komplexgebundene Europium enthaltende Copolymerisat, das unter UV-Anregung intensiv rot leuchtet. Endprodukt: 0,3 % Eu

### Beispiel 3

Polymere Fluoreszenzfarbstoffe
3a) 0,25 g Cumarin 1 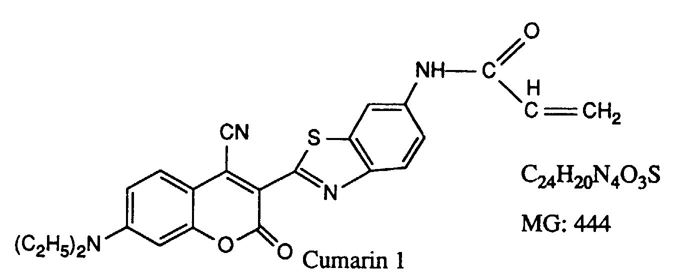 1 g Methylmethacrylat und 8,25 g Stearylmethacrylat werden in 30 ml Dimethylacetamid gelöst und auf 65°C erhitzt Nach Zugabe von 0,1 g Azobisisobutyronitril wird 16 Stunden bei dieser Temperatur gerührt, der Niederschlag abgesaugt, in Methylenchlorid gelöst, in Isopropanol ausgefällt und getrocknet. Ausbeute: 69 % d.Th. eines den Farbstoff Cumarin 1 enthaltenen Copolymerisats, der bei Anregung mit UV-Licht rot leuchtet.
3b) Beispiel 3a) wird wiederholt, aber 0,25 g Cumarin 2 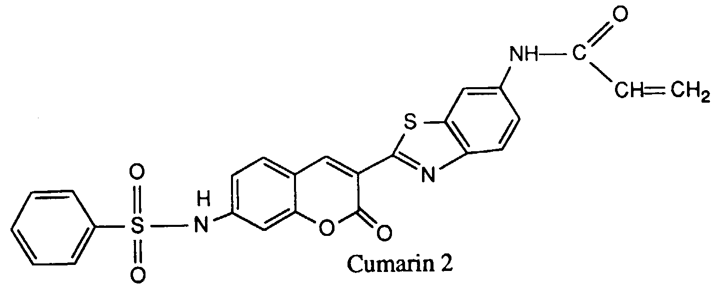 eingesetzt. Ausbeute 70 % d.Th. eines den Farbstoff Cumarin 2 enthaltenen Copolymerisat, der bei Anregung mit UV-Licht grün leuchtet.

### Beispiel 4

Einarbeitung des Polymerisats 1b, 2b, 3a und 3b in Polyethylen

Ein Haake Rheometer Kneter, Fassungsvolumen 50 ml, wird auf 130°C hochgeheizt und 44 g Polyethylen-Granulat (LDPE, Novex Exp. 2184) eingestreut. Nach 10minütigem Kneten werden 0,37 g 2b), je 0,04 g 3a) und 3b), sowie 0,185 1b) zugegeben und noch 15 min bei dieser Temperatur geknetet. Das Polymer enthält somit von jeder dieser Verbindungen etwa 1-8 %. Die Komplex-Verbindungen 1b) und 2b) haben eine grüne bzw. rote Fluoreszenz, die etwa 500 Mikrosekunden anhält, die Farbstoffe 3a) und 3b) eine rote bzw. grüne Fluoreszenz mit einer Dauer von rund 10 Nanosekunden.

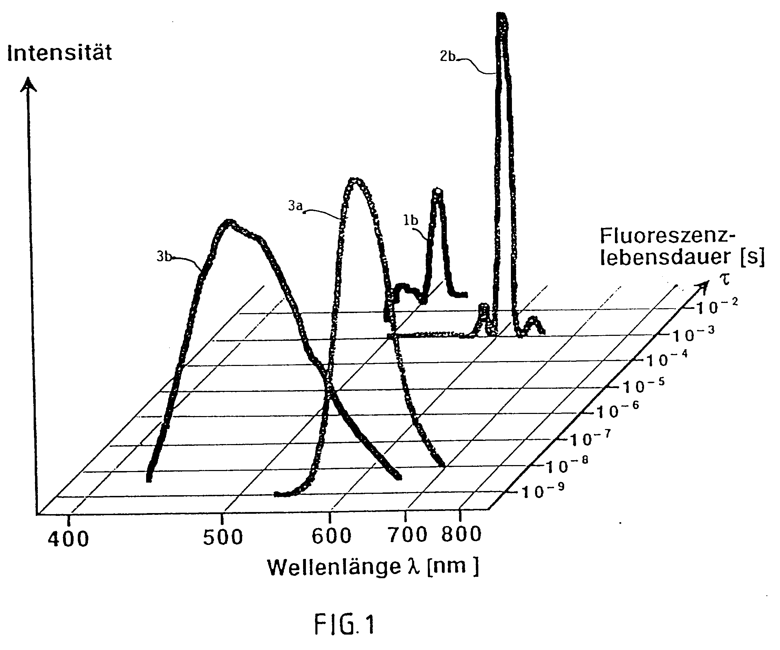

Die Verhältnisse werden durch die Figur 1 veranschaulicht.

### Beispiel 5

Nachweis der Fluoreszenzsignale an einer nach Beispiel 4 erzeugten Probe.

Die Trennung der Fluoreszenzsignale wurde mit einem zeitauflösenden Fluoreszenzspektrometer FL 900 der Firma Edingburgh Instruments durchgeführt.

Dazu wurde eine nach Beispiel 4 hergestellte Probe mit einer Mikrosekunden-Blitzlampe angeregt und in Kanälen von 2 nm spektraler Breite die Fluoreszenzabklingkurven im Wellenlängenintervall von 450 nm bis 640nm aufgenommen. Die zeitliche Diskriminierung wird über eine Software erstellt:

Integriert man jeden Kanal z.B. die ersten 20 Mikrosekunden, so erhält man die Spektren der Komponenten 3a) und 3b) mit der kurzlebigen Fluoreszenz. Startet man die Integration bei 80 Mikrosekunden und integriert 1 Millisekunde so erhält man den Signal-Beitrag der Komplex-Verbindungen 1b) und 2).

Die Diskriminierung hinsichtlich der Emissionsfrequenz ergibt sich unmittelbar aus den Spektren, da die Emissionen hinreichend weit auseinanderliegen.

Durch Festlegung von definierten Zeit- bzw. Frequenzfenstern lassen sich die genannten Diskriminierungen meßtechnisch erheblich vereinfachen.

## Patentansprüche

1. Verfahren zum Kenntlichmachen verschiedener Kunststoffe, dadurch gekennzeichnet, daß jeder Kunststoff mit mehreren Fluoreszenzfarbstoffen versehen wird, die sich durch ihre Emissionsfrequenz und/oder durch die Fluoreszenzdauer unterscheiden, so daß jedem Kunststoff eindeutig ein Fluoreszenzmuster zugeordnet werden kann, daß sich durch Zeitdauer der Fluoreszenz und/oder erschienene Frequenzen unterscheidet.

## Claims

1. A method of identifying different plastics, characterised in that each plastic is provided with a plurality of fluorescent dyes which differ in terms of their emission frequencies and/or in terms of the duration of their fluorescence, so that a fluorescence pattern, which is distinguished by the duration of the fluorescence and/or by the frequencies occurring, can be unambiguously assigned to each plastic.

## Revendications

1. Procédé pour caractériser des résines synthétiques différentes, caractérisé en ce que l'on introduit dans chacune des résines synthétiques plusieurs colorants fluorescents qui différent entre eux par la fréquence d'émission et/ou par la durée de la fluorescence, de sorte que l'on peut attribuer à chacune des résines synthétiques, sans équivoque, un modèle de fluorescence qui diffère par la durée de la fluorescence et/ou par les fréquences observées.
